# EUROPÄISCHE PATENTSCHRIFT

(11) **EP 1 358 802 B1**
(45) Veröffentlichungstag und Bekanntmachung des Hinweises auf die Patenterteilung: **17.01.2007**
(21) Anmeldenummer: 03009393.4
(22) Anmeldetag: 24.04.2003
(51) Int. Cl.: A21C 1/10, B01F 15/02, B01F 5/02, B01F 5/18, B01F 3/12

(54) **Lebensmittel-Teigbereitungsvorrichtung und Verfahren zur Teigbereitung**
Apparatus and method for the preparation of foods dough
Appareil et procédé pour la preparation de pâte alimentaire

(30) Priorität: 02.05.2002 DE 10219683
(43) Veröffentlichungstag der Anmeldung: 05.11.2003
(73) Patentinhaber: Noll, Bernhard, Dr., 74544 Michelbach a.d. Bilz (DE)
(72) Erfinder: Noll, Bernhard, Dr., 74544 Michelbach a.d. Bilz (DE)
(74) Vertreter: Behrmann, Niels

(56) Entgegenhaltungen:
- EP-A- 0 377 161
- GB-A- 318 851
- GB-A- 1 596 685
- US-A- 3 212 757
- PATENT ABSTRACTS OF JAPAN vol. 011, no. 176 (C-426), 5. Juni 1987 (1987-06-05) & JP 62 001445 A (KEIICHIRO MUROFUSHI), 7. Januar 1987 (1987-01-07)

## Beschreibung

Die vorliegende Erfindung betrifft eine Vorrichtung zur Teigbereitung nach dem Oberbegriff des Hauptanspruchs sowie ein Verfahren zum Bereiten eines Lebensmittelteigs nach dem Oberbegriff des unabhängigen Anspruchs 16.

Eine derartige Vorrichtung bzw. ein gattungsgemäßes Verfahren sind aus dem Stand der Technik allgemein bekannt; insbesondere im Zusammenhang mit der großtechnischen bzw. industriellen Herstellung von Brot erfolgt nämlich das Kneten des für den anschließenden Backvorgang erforderlichen Teigs in der oberbegrifflich beschriebenen Weise des gattungsgemäßen Verfahrens bzw. durch gattungsbildende Vorrichtungen.

Konkret werden bei aus dem Stand der Technik bekannten Vorrichtungen die Zutaten -- typischerweise Mehl, Hefe und Salz -- mit Wasser in einer Mischkammer mit Hilfe von mechanischen Knetwerkzeugen zu einem Teig geknetet; aus dem Stand der Technik sind dabei sogenannte Spiralkneter bzw. auch kontinuierliche Kneter bekannt.

Insbesondere jedoch in einem industriellen Umfeld -- die Vorrichtung zur Teigbereitung erhält hier den Charakter einer industriellen Fertigungsanlage -- kommt es dabei besonders auf die realisierbare Knetgeschwindigkeit bzw. den für den Knetvorgang benötigten Energieaufwand an; nicht zuletzt auch auf dem Gebiet der großtechnischen Backwarenherstellung haben sich derartige Faktoren, die sich unmittelbar auf die Produktionskosten auswirken, als kritische Erfolgsfaktoren im Wettbewerb erwiesen.

Wird beispielsweise eine herkömmliche Produktionsanlage einer Fertigungskapazität von einer Tonne Teig pro Stunde herangezogen, liegt ein typischer Energiebedarf konventioneller Knetverfahren bei etwa 16 kWh pro Tonne, bei eher moderneren, kontinuierlichen Verfahren bei ca. 8 kWh. Hinzu kommt das Problem, dass für eine Stundenkapazität von ca. einer Tonne Anlagen beträchtlichen Ausmasses benötigt werden, da der eigentliche Knetvorgang (typischerweise 10 Minuten für eine Charge) relativ lang ist.

Hier besteht der Bedarf nach Optimierung, sowohl im Hinblick auf den Durchsatz (d.h. die mit einer Anlage eines vorbestimmten Knetvolumens erreichbare Knetleistung bzw. das erreichbare Knetvolumen), als auch im Hinblick auf den pro Menge gekneteten Teigs benötigten Energieaufwand, damit, insbesondere auch vor dem Hintergrund von Substitutionstechnologien, die gattungsgemäßen Ansätze zur industriellen Teigbereitung wettbewerbsfähig bleiben.

Aus GB 1 596 685, ferner aus Patent Abstracts of Japan Vol. 011, No. 176 & JP 62 001445 A, ferner aus GB-A-318 851 sowie aus EP-A-0 377 161, sind jeweils Vorrichtung bekannt, mit welchen teigartige oder pastöse Mischungen bereitet werden können.

Entsprechend ist es Aufgabe der vorliegenden Erfindung, eine gattungsbildende Vorrichtung sowohl im Hinblick auf ihre Verarbeitungsgeschwindigkeit pro Einheit gekneteten Teigs, als auch den benötigten Energieeinsatz pro Einheit gekneteten Teigs, zu verbessern.

Die Aufgabe wird durch die Lebensmittel-Teigbereitungs-vorrichtung mit den Merkmalen des Hauptanspruchs sowie durch das Verfahren mit den Merkmalen des unabhängigen Patentanspruchs 16 gelöst. Vorteilhafte Weiterbildungen der Erfindung sind in den Unteransprüchen beschrieben.

In erfindungsgemäß vorteilhafter Weise und in grundsätzlicher Abkehr von konventionellen Knetverfahren durch mechanisches Durchmischen der Zutaten mittels Spiralen, Schnecken oder Knethaken, wird im Rahmen der erfindungsgemäßen Lösung das Wasser (bzw. andere Flüssigkeit, etwa Milch) unter Hochdruck in die Mischkammer eingebracht und durchmischt dort die bereits eingetragenen übrigen Zutaten (mit überwiegendem Bestandteil Mehl). Durch das Hochdruck-Einspritzen, ein typischer Einspritzdruck für das Wasser liegt im Bereich zwischen ca. 30 und ca. 100 bar, wird eine einem konventionellen mechanischen Knetvorgang äquivalente Durchmischung der Materialien erreicht, mit dem Ergebnis, dass nach einem relativ zum mechanischen Kneten kurzen Ein-spritzvorgang eine einen teigartigen Aggregatzustand besitzende Masse vorliegt, welche dann in ansonsten bekannter Weise den anschließenden Formgebungs-, Fermentations-, Ruhe, Back- bzw. Erhitzungsschritten zugeführt werden kann.

In erfindungsgemäß vorteilhafter Weise wird so vor allem der Zeitaufwand (und damit auch der notwendige absolute Energieeintrag) gegenüber konventioneller Technologie drastisch vermindert. Gegenüber einer typischen Knetdauer von ca. 10 Minuten aus dem Stand der Technik ist nunmehr ein vergleichbarer Effekt durch das erfindungsgemäße Einspritzen des Wassers mit einer Behandlungsdauer zu erreichen, welche im einstelligen Sekundenbereich liegt. Die sich daraus ergebenden Vorteile hinsichtlich der nutzbaren Kapazität einer Anlage (bzw. der benötigten Anlagengröße) sind evident. Entsprechendes gilt für den spezifischen Energiebedarf. Während, wie vorstehend erläutert, eine typische benötigte Energiemenge pro Tonne geknetetem Teig im Bereich zwischen 8 und 16 kWh liegt, so reduziert die vorliegende Erfindung diesen Energiebedarf auf ca. 1,3 kWh.

In der praktischen Realisierung ist es besonders bevorzugt, die erfindungsgemäße Vorrichtung für einen kontinuierlichen Knetbetrieb auszubilden. Zu diesem Zweck wird die die Zutaten der Mischkammer zuführende Förderschnecke bevorzugt so ausgebildet, dass ein kontinuierlicher Massestrang entsteht, welcher austragsseitig den bereits gemischten (d.h. in erfindungsgemäßer Weise durchkneteten) Teig in quasi - kontinuierlicher Weise durch die weiterbildungsgemäß vorgesehene Austragsöffnung austrägt.

Weiterbildungsgemäß hat es sich zudem als vorteilhaft herausgestellt, zusätzlich Luft in Form von Druckluft in den Mischbehälter bzw. den Mischvorgang hinein zu dosieren, so dass der Einschluß von Luft in den Teig reguliert bzw. voreingestellt werden kann. In weiterbildungsgemäßer Weise ist daher die Düseneinheit zusätzlich mit einer Hochdruckdüse für Druckluft versehen.

Im Rahmen der vorliegenden Erfindung liegt es insbesondere, weiterbildungsgemäß die Mischkammer mittels eines langgestreckten, sich bevorzugt senkrecht erstreckenden Gehäuses auszubilden. Auf diese Weise können die Zutaten, insbesondere das Mehl, durch einen oberen Einlass eintreten und werden durch eine seitlich vorgesehene, schlitzförmige Düse mit der Flüssigkeit zum Mischen vermengt. Die senkrechte Anordnung der Mischkammer sorgt besonders geeignet für einen einfachen Austrag des fertigen Teigs, so dass insoweit die notwendige Austragung vereinfacht ist.

Die erfindungsgemäß realisierbare kurze Knetdauer bringt die mögliche Konsequenz mit sich, dass -- verglichen mit der relativ langen konventionellen Knettechnik -- der behandelte Teig in seiner oxydativen Entwicklung noch nicht ausreichend fortgeschritten sein kann. Im Rahmen der vorliegenden Erfindung ist es daher weiterbildungsgemäß vorgesehen, diese oxydative Entwicklung durch andere Maßnahmen, etwa das Beimischen von geeigneten Oxydationsmitteln (Ascorbinsäure, Ozon, Wasserstoffperoxyd usw.) auszugleichen und/oder das ohnehin mit Hochdruck im Rahmen der Erfindung eingebrachte Wasser mit Sauerstoff vorzubehandeln ("imprägnieren"). Insbesondere durch den hohen Druck wird nämlich die Löslichkeit von Sauerstoff in Wasser erhöht, und bei der Entspannung würde der voreingebrachte Sauerstoff relativ schnell freigesetzt, so dass er oxydativ wirken kann.

Sollte sich bei bestimmten Verfahrenskonstellationen herausstellen, dass der erfindungsgemäß notwendige hohe Druck eine nachteilige Wirkung auf die im Rahmen der Zutaten verwendete Backhefe besitzt, so ist es weiterbildungsgemäß vorgesehen, die ursprünglich und gemäß einer ersten Ausführungsform ohne jegliche zusätzliche mechanische Kneteinheit realisierbare Vorrichtung auch durch das zusätzliche Vorsehen einer (allerdings in ihrer Leistung reduzierten) konventionellen Knetmechanik zu ergänzen. Insoweit ist es dann auch von der Erfindung mit umfasst, eine den jeweiligen Fertigungsbedingungen angepasste hybride Realisierung zwischen konventioneller mechanischer Knettechnik und der erfindungsgemäßen Einspritztechnik zu realisieren.

Entsprechendes gilt für die weiterbildungsgemäß vorgesehene Möglichkeit, den Teig während des Knetvorgangs zusätzlich mit Ultraschall zu beaufschlagen, um so eine weitere Beeinflussung bzw. Einstellbarkeit der Teigentwicklung während des Fertigungsprozesses zu erreichen.

Während im Rahmen der Erfindung bevorzugte Betriebsparameter und Verhältnisse angegeben sind, so ist die vorliegende Erfindung darauf nicht beschränkt, und auch wenn im Rahmen der Erfindung ein Gewichtsverhältnis von Wasser:Zutaten von ca. 6 zu 10 als besonders geeignet sich herausgestellt hat, so ist die vorliegende Erfindung darauf nicht beschränkt.

Im Ergebnis erreicht die vorliegende Erfindung, nämlich im Prinzip das direkte Beaufschlagen einer definierten Mehlschicht im Mischbehälter mit Wasser unter hohem Druck, zahlreiche Vorteile: Wie oben skizziert, ermöglichen der geringe spezifische Energieeintrag sowie der durch die geringe Behandlungszeit erreichte niedrige Platzbedarf hohe Kostenersparnisse. Das Fehlen jeglicher Teile in der Teigbereitungsphase wirkt sich wesentlich auf die Störungsunempfindlichkeit und Prozesstabilität aus, ebenso wie Kontamination durch Fremdkörper, Insekten oder dergleichen weitgehend verhindert werden können.

Insbesondere im kontinuierlichen Betrieb läßt sich zudem der Reinigungsaufwand, etwa im Vergleich zu einem konventionellen Batch-Betrieb mit herkömmlichen mechanischen Knetern, deutlich verringern, und zusätzlich ergibt sich die Möglichkeit, das Produktionsverfahren so integriert staubfrei zu gestalten, dass insbesondere für aus dem Stand der Technik übliche Probleme, etwa Bäckerasthma, deutliche Vorteile bestehen. Im Hintergrund steht zudem eine vereinfachte Bedienung, daher eine potentielle Reduktion von Personalkosten, ebenso wie ein verringerter Bedarf an Backhilfsmitteln durch optimierte Verwendung im Rahmen des erfindungsgemäßen neuen Verfahrens.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in
- Fig. 1: ein schematisches Schaubild in der seitlichen Schnittansicht mit der prinzipiellen Funktionsweise der Vorrichtung zur Teigbereitung gemäß einer ersten Ausführungsform der vorliegenden Erfindung;
- Fig. 2: ein Flußdiagramm mit wesentlichen Verfahrensschritten des Verfahrens gemäß einer Ausführungsform der vorliegenden Erfindung und
- Fig. 3: eine schematische Seitenansicht der vorliegenden Erfindung gemäß einer alternativen zweiten und bevorzugten Ausführungsform mit i.w. senkrecht angeordneter, langgestreckter Mischkammer und seitlich eingreifender Schlitzdüse.

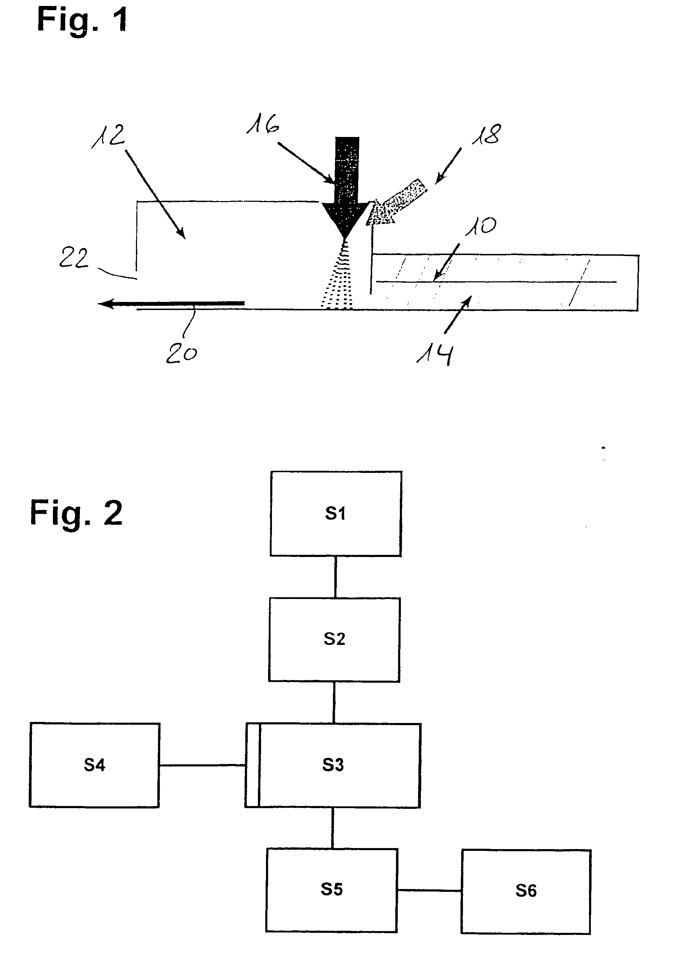

Die in Fig. 1 schematisch gezeigte Vorrichtung wird mit einer Basisrezeptur wie folgt betrieben: Weizenmehl Typ 550 100 kg, Wasser 60 kg, Trockenhefe 1,2 kg, Salz 2 kg. Diese Zutaten (ausgenommen das Wasser) werden über eine Förderschnecke 10 als wesentlicher Teil einer einer Mischkammer 12 vorgeschalteten Fördereinheit 14 der Mischkammer so zugeführt, dass in dieser eine flache Schicht aus dem Mehl-Hefe-Salzgemisch liegt. Auf dieses Gemisch wird dann, vgl. den vertikalen dicken Pfeil 16, das Wasser mit Hochdruck, typischerweise 70 bar, gespritzt, so dass es zu einer einem Knetverfahren im Ergebnis ähnlichen Vermengung des Wasser mit den Trockensubstanzen der Zutaten kommt. Zusätzlich wird, vgl. den schräg verlaufenden Pfeil 18, über zusätzliche Lufteinlassdüsen einer Düseneinheit Luft in die Mischkammer 12 unter Druck eingeblasen, damit der Einschluss von Luft in dem Teig vorbestimmt eingestellt werden kann. Entlang einer durch einen horizontalen Pfeil 20 verlaufenden Austragsrichtung verlässt das so gebildete Knetgemisch durch eine Auslassöffnung 22 die Mischkammer 12, wobei das Austragen in der gezeigten Weise einfach dadurch erfolgt, dass durch die Förderschnecke 10 kontinuierlich neue Trockensubstanz in die Mischkammer eingebracht wird.

Dieses prinzipielle Verfahren wird auch anhand des Flussdiagramms der Fig. 2 verdeutlicht: Zutaten in Form des Mehls (aus einem Mehlsilo), Salz, der Starterkulturen (Hefe, Trockenhefe, Trockensauer), ggf. zusätzlich Backmittel und optionale Zutaten, werden in einem Schritt S1 trocken vorgemischt und dann in Schritt S2 mittels der Fördereinheit 14 zur Mischkammer 12 gemischt. Dort findet in Schritt S3 das Einspritzen der Wassermenge unter Druck statt, zusätzlich wird in Schritt S4 Druckluft eingeblasen, so dass sich ein Teig mit der gewünschten Luft-Einschlusscharakteristik bildet.

Dieser Teig wird in Schritt S5 ausgetragen und in Schritt S6 in ansonsten bekannter konventioneller Weise zu Gebäck weiterverarbeitet, insbesondere durch ansonsten bekannte Backverfahren.

Die beschriebene Vorgehensweise ist nicht auf die angegebenen Schritte bzw. Merkmale beschränkt; so ist es insbesondere möglich und von der Erfindung mit umfasst, dem einzuspritzenden Wasser und/oder der Trockensubstanz der Zutaten geeignete, das oxidative Verhalten des Teiges beeinflussende Mittel zuzusetzen, wobei hier dann der Fachmann geeignete Aggregate wählen wird. Ebenso ist es gemäß einer alternativen (nicht gezeigten) Weiterbildung von der Erfindung umfasst, den Teig in dem Behälter 12 mittels weiterer mechanisch wirksamer Aggregate (z. B. herkömmlicher mechanischer Knetelemente) zu behandeln, ergänzend oder alternativ diesen Teil einer Ultraschallbehandlung auszusetzen, um ein mögliches Problem nicht ausreichender oxidativer Entwicklung (bedingt durch die kurze Verweilzeit) zu lösen.

In der praktischen Realisierung lässt die in den Figuren 1 bzw. 2 dargestellte Ausführungsform der Erfindung eine typische Behandlungszeit von ca. 6 Sekunden zu, und es ist ein Energiebedarf für eine Tonne Teig von ca. 1,3 kWh anzusetzen.

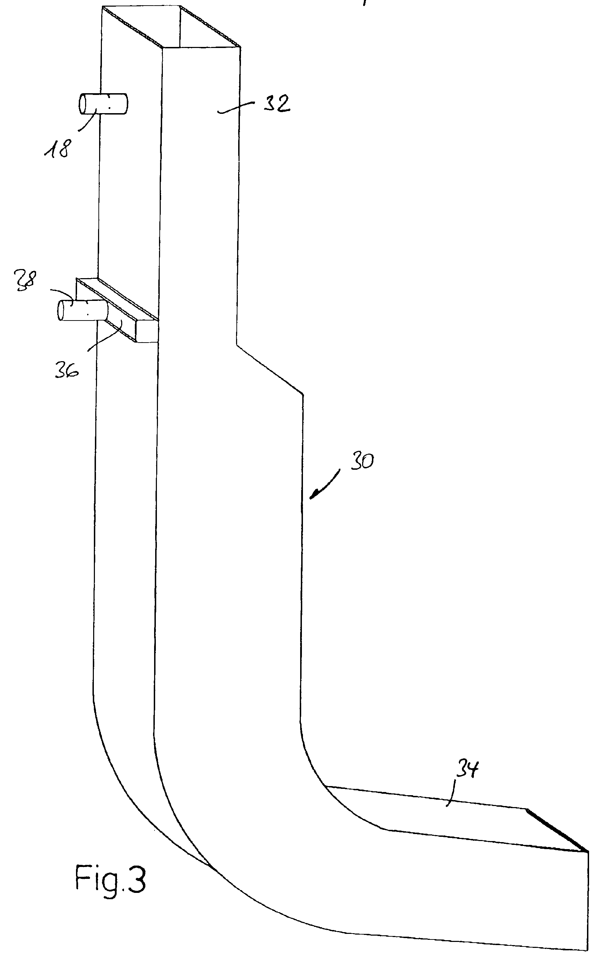

Entsprechendes gilt auch für die Realisierungsform der Erfindung gemäß Fig. 3, wo eine Mischkammer 30 in Form eines mit einem rechteckförmigen Querschnitt versehenen, sich vertikal erstreckenden Rohres ausgebildet ist, welches in einem oberen, eingangsseitigen Ende einen Einlassabschnitt 32 für Mehl und weitere Zutaten aufweist, und welches bodenseitig in einen horizontal verlaufenden Auslassbereich 34 gekrümmt ist.

Im Einlassbereich 32 sitzt die bereits im Zusammenhang mit der Fig. 1 beschriebene Luftdüse 18, und im Bereich der Erweiterung des Gehäuses 30 ist, sich quer über die Breite des Gehäuses erstreckend, eine Schlitzdüse 36 vorgesehen, welche über einen Stutzen 38 mit Druckwasser beaufschlagt wird und dann den Wasserstrahl auf der gesamten Gerätebreite -- typischerweise ca. 8 cm -- schräg nach unten gegen das Gehäuse drückt.

Die in der Fig. 3 gezeigte Ausführungsform besitzt den Vorteil, dass der bereitete Teig kontinuierlich durch sein Eigengewicht nach unten fällt, mithin also der Austrag sowie damit die Materialbewegung durch die Anordnung wesentlich vereinfacht ist. Die Anordnung ist mit vergleichbaren Betriebsparametern wie oben im Zusammenhang mit den Figuren 1 und 2 angegeben betreibbar.

## Patentansprüche

1. Lebensmittel-Teigbereitungsvorrichtung zur Teigbereitung aus für Lebensmittel vorgesehenen Zutaten sowie einer Flüssigkeit, insbesondere Wasser, mit einer zur Aufnahme der Zutaten sowie eines daraus bereiteten Teigs ausgebildeten Mischkammer (12), der Fördermittel (14) für ein Eintragen der Zutaten in die Mischkammer sowie Knetmittel (16) für ein Kneten der Zutaten zugeordnet sind,
**dadurch gekennzeichnet, dass**
die Knetmittel eine einzelne, auf eine Gehäuseinnenwand der Mischkammer gerichtete Schlitzdüse (16) für das Einbringen der Flüssigkeit in die Mischkammer (12) bei dort bereits eingetragenen Zutaten aufweist, die zum Einbringen der Flüssigkeit unter Hochdruck so ausgebildet ist, dass eine Vermischung der Zutaten in eine teigartige Konsistenz zur Bereitung des Teigs erfolgt.

2. Vorrichtung nach Anspruch 1, **dadurch gekennzeichnet, dass** die Mischkammer (12) eine Austragsöffnung (22) für den bereiteten Teig aufweist, die so ausgebildet und relativ zu den Fördermitteln vorgesehen ist, dass das Eintragen der Zutaten in die Mischkammer ein Austragen von in der Mischkammer vorhandenen bereiteten Teigs bewirkt.

3. Vorrichtung nach Anspruch 1 oder 2, **dadurch gekennzeichnet, dass** die Fördermittel (14) eine für das Fördern von Mehl ausgebildete Schneckenvorrichtung (10) aufweisen.

4. Vorrichtung nach einem der Ansprüche 1 bis 3, **dadurch gekennzeichnet, dass** die Schlitzdüse für das zusätzliche Einbringen von Druckluft (18) in die Mischkammer ausgebildet ist.

5. Vorrichtung nach Anspruch 4, **dadurch gekennzeichnet, dass** die Schlitzdüse separate Hochdruckdüsen für die Flüssigkeit und die Druckluft aufweist.

6. Vorrichtung nach Anspruch 5, **dadurch gekennzeichnet, dass** eine Drucklufteinbringung durch die zugeordnete Hochdruckdüse regelbar oder einstellbar realisiert ist.

7. Vorrichtung nach einem der Ansprüche 1 bis 6, **gekennzeichnet durch** Mittel zur Imprägnierung der Flüssigkeit mit Sauerstoff vor dem Einbringen des Wassers in die Mischkammer.

8. Vorrichtung nach einem der Ansprüche 1 bis 7, **dadurch gekennzeichnet, dass** der Mischkammer zusätzlich Mittel zum mechanischen Kneten der Zutaten, insbesondere mechanisch angetriebene Knethaken, -schnecken und/oder - schaufeln zugeordnet sind.

9. Vorrichtung nach einem der Ansprüche 1 bis 7, **dadurch gekennzeichnet, dass** die Mischkammer keine zusätzlichen Mittel zum mechanischen Kneten der Zutaten über die Schlitzdüse hinaus aufweist.

10. Vorrichtung nach einem der Ansprüche 1 bis 9, **dadurch gekennzeichnet, dass** der Mischkammer Mittel zur Ultraschallbehandlung des Mischkammerinhalts zugeordnet sind.

11. Vorrichtung nach einem der Ansprüche 1 bis 10, **dadurch gekennzeichnet, dass** die Fördermittel zum Eintragen der Zutaten ohne das Wasser mit einem Durchsatz zwischen 300 und 1.000 kg/h ausgebildet sind.

12. Vorrichtung nach einem der Ansprüche 1 bis 11, **dadurch gekennzeichnet, dass** die Schlitzdüse zum Einbringen der Flüssigkeit mit einem Durchsatz zwischen 200 und 500 l/h ausgebildet ist, wobei ein zugehöriger Flüssigkeitsdruck auf einen Bereich zwischen 30 und 100 bar eingestellt ist.

13. Vorrichtung nach einem der Ansprüche 1 bis 12, **dadurch gekennzeichnet, dass** die Mischkammer langgestreckt und vertikal angeordnet ist, wobei an einem oberen Ende ein Einlass für die Zutaten ausgebildet ist und in einem seitlichen Wandbereich der Mischkammer eine Hochdruckdüse als Schlitzdüse für die Flüssigkeit vorgesehen ist.

14. Vorrichtung nach einem der Ansprüche 1 bis 13, **dadurch gekennzeichnet, dass** die Schlitzdüse so angeordnet ist, dass ein durch die Schlitzdüse tretender Flüssigkeitsstrahl, insbesondere Wasserstrahl, sich über Gehäusebreite der Mischkammer erstreckt.

15. Vorrichtung nach einem der Ansprüche 1 bis 14, **dadurch gekennzeichnet, dass** die Düseneinheit zum Einbringen von Luft mit einem Durchsatz zwischen 300 und 1.000 l/h ausgebildet ist.

16. Verfahren zum Bereiten eines Lebensmittelteigs, insbesondere Brotteigs, aus für Lebensmittel vorgesehenen Zutaten sowie einer Flüssigkeit, insbesondere Wasser, mit den Schritten:
- Eintragen der Zutaten in eine Mischkammer (12)und
- Kneten der Zutaten in einen Teig,
**dadurch gekennzeichnet, dass**
- die Flüssigkeit durch ein Einbringen der Flüssigkeit mittels einer einzelnen, auf eine Gehäuseinnenwand der Mischkammer gerichteten Schlitzdüse unter Hochdruck in die in der Mischkammer befindlichen Zutaten erfolgt.

17. Verfahren nach Anspruch 16, **dadurch gekennzeichnet, dass** den Zutaten und/oder dem Teig Oxydationsmittel zur Beeinflussung einer oxydativen Entwicklung des Teigs zugesetzt werden, die aus der Gruppe bestehend aus Ascorbinsäure, Ozon, Wasserstoffperoxyd ausgewählt werden.

## Claims

1. A food dough production device for the production of dough from ingredients intended for human consumption as well as a liquid, water in particular, having
a mixing chamber (12) designed to receive and accommodate the ingredients as well as a dough made from them, to which conveying means (14) for feeding the ingredients into the mixing chamber are affixed as well as kneading means (16) for kneading the ingredients, wherein
the kneading means is provided with a single slotted nozzle (16) directed towards an inner wall of the mixing chamber, for the injection of the liquid into the mixing chamber (12) containing the already fed ingredients, said nozzle unit being designed for the injection of the liquid under high pressure in such a way that a mixing of the ingredients to a dough-like consistency for preparing the dough takes place.

2. A device according to claim 1, wherein the mixing chamber (12) is provided with a discharge opening (22) for the dough produced which is so designed and located in relation to the conveying means that feeding the ingredients into the mixing chamber causes a discharge of prepared dough already present in the mixing chamber.

3. A device according to claims 1 or 2, wherein the conveying means (14) has a screw device (10) designed for transporting flour.

4. A device according to any of the claims 1 to 3, wherein the slotted nozzle is designed for the additional injection of compressed air (18) into the mixing chamber.

5. A device according to claim 4, wherein the slotted nozzle has separate high-pressure nozzles for the liquid and the compressed air.

6. A device according to claim 5, wherein injection of the compressed air is controllable or adjustable by means of the affixed high-pressure nozzle.

7. A device according to any of the claims 1 to 6,
**characterised by** means for the impregnation of the liquid with oxygen prior to the injection of the water into the mixing chamber.

8. A device according to any of the claims 1 to 7, wherein means for the mechanical kneading of the ingredients, especially mechanically operated kneading hooks, mixing screws, and/or mixing blades are additionally provided in the mixing chamber.

9. A device according to any of the claims 1 to 7, wherein the mixing chamber is provided with no additional means for the mechanical kneading of the ingredients, apart from the slotted nozzle.

10. A device according to any of the claims 1 to 9, wherein means for ultrasonic treatment of the content of the mixing chamber are inserted in the mixing chamber.

11. A device according to any of the claims 1 to 10, wherein the conveying means for transporting the ingredients without the water are designed for a throughput between 300 and 1,000 kg/h.

12. A device according to any of the claims 1 to 11 wherein the slotted nozzle for the injection of liquid is designed for a throughput between 200 and 500 1/h, with the liquid pressure belonging hereto being adjusted in the range of between 30 and 100 bar.

13. A device according to any of the claims 1 to 12, wherein the mixing chamber is long and vertical, and an inlet for the ingredients is designed at an upper end of said unit, and the said mixing chamber is provided with a high-pressure nozzle as slotted nozzle for the liquid to be mounted at a side wall.

14. A device according to any of the claims 1 to 13,
**characterized in that** the slotted nozzle for the liquid which is designed in such a way that a liquid jet, particularly a water jet, entering the chamber through the said slotted nozzle, extends across the whole width of the mixing chamber's casing.

15. A device according to any of the claims 1 to 14, wherein the nozzle unit for air injection is designed for a throughput of between 300 and 1,000 1/h.

16. A method for the production of dough intended for human consumption, a bread dough in particular, made from ingredients intended for human consumption as well as a liquid, water in particular, comprising the following steps:
- feeding the ingredients into a mixing chamber (12) and
- kneading the ingredients to form a dough,
**characterized in that**
- the mixing is carried out by injecting the liquid under high pressure by means of a single slotted nozzle directed towards an inner wall of the mixing chamber, into the ingredients already fed into the mixing chamber.

17. A method according to claim 16 wherein oxidizing agents intended to influence the oxidative development of the dough are admixed to the ingredients and/or the doughthe said oxidizing agents being chosen from the group consisting of ascorbic acid, ozone, hydrogen peroxide.

## Revendications

1. Dispositif de préparation de pâte alimentaire pour la préparation de pâte à partir d'ingrédients prévus pour le produit alimentaire, ainsi que d'un liquide, en particulier de l'eau, avec une chambre de mélange (12), réalisée pour recevoir les ingrédients, ainsi qu'une pâte préparée à partir de ceux-ci, et à laquelle sont associés des moyens de transport (14) pour une introduction des ingrédients dans la chambre de mélange, ainsi que des moyens de pétrissage (16) pour un pétrissage des ingrédients,
**caractérisé en ce que**,
- les moyens de pétrissage présentent une buse à fente (16) individuelle, orientée vers une paroi intérieure de boîtier de la chambre de mélange pour introduire le liquide dans la chambre de mélange (12), pour des ingrédients y étant déjà introduits, et qui est réalisée pour l'introduction du liquide à haute pression, de sorte à réaliser un mélange des ingrédients dans une consistance pâteuse, pour la préparation de la pâte.

2. Dispositif selon la revendication 1, **caractérisé en ce que** la chambre de mélange (12) présente une ouverture d'expulsion (22) pour la pâte préparée, qui est réalisée et prévue par rapport aux moyens de transport, de manière que l'introduction des ingrédients dans la chambre de mélange provoque une expulsion de la pâte préparée se trouvant dans la chambre de mélange.

3. Dispositif selon la revendication 1 ou 2, **caractérisé en ce que** les moyens de transport (14) présentent un organe à vis (10) réalisé pour le transport de farine.

4. Dispositif selon l'une des revendications 1 à 3, **caractérisé en ce que** la buse à fente est réalisée pour l'introduction supplémentaire d'air comprimé (18) dans la chambre de mélange.

5. Dispositif selon la revendication 4, **caractérisé en ce que** la buse à fente comporte des buses séparées à haute pression pour le liquide et pour l'air comprimé.

6. Dispositif selon la revendication 5, **caractérisé en ce qu'**une introduction d'air comprimé est réalisée de façon régulable ou réglable par la buse à haute pression associée.

7. Dispositif selon l'une des revendications 1 à 6, **caractérisé par** des moyens d'imprégnation du liquide avec de l'oxygène avant introduction de l'eau dans la chambre de mélange.

8. Dispositif selon l'une des revendications 1 à 7, **caractérisé en ce que** sont associés à la chambre de mélange des moyens supplémentaires pour le pétrissage mécanique des ingrédients, en particulier des crochets, des vis et/ou des aubes de pétrissage entraînés mécaniquement.

9. Dispositif selon l'une des revendications 1 à 7, **caractérisé en ce que** la chambre de mélange ne présente aucun moyen supplémentaire pour le pétrissage mécanique des ingrédients par la buse à fente.

10. Dispositif selon l'une des revendications 1 à 9, **caractérisé en ce que** sont associés à la chambre de mélange des moyens pour le traitement aux ultrasons du contenu de la chambre de mélange.

11. Dispositif selon l'une des revendications 1 à 10, **caractérisé en ce que** les moyens de transports sont réalisés pour introduire les ingrédients sans l'eau, avec un débit compris dans la fourchette entre 300 et 1 000 kg/h.

12. Dispositif selon l'une des revendications 1 à 11, **caractérisé en ce que** la buse à fente est réalisée pour l'introduction de liquide avec un débit dans la fourchette entre 200 et 500 1/h, la pression de liquide afférente étant réglée dans une fourchette comprise entre 30 et 100 bar.

13. Dispositif selon l'une des revendications 1 à 12, **caractérisé en ce que** la chambre de mélange est étirée en longueur et disposée verticalement, de sorte que sur une extrémité supérieure est ménagée une entrée pour les ingrédients, et dans une zone de paroi latérale de la chambre de mélange est prévue une buse à haute pression, réalisée sous forme de buse à fente pour le liquide.

14. Dispositif selon l'une des revendications 1 à 13, **caractérisé en ce que** la buse à fente est disposée de manière qu'un jet de liquide passant par la buse à fente, en particulier un jet d'eau, s'étende sur la largeur du boîtier de la chambre de mélange.

15. Dispositif selon l'une des revendications 1 à 14, **caractérisé en ce que** l'unité à buse est réalisée pour introduire de l'air à un débit compris entre 300 et 1000 l/h.

16. Procédé de préparation d'une pâte alimentaire, en particulier de pâte à pain, à partir d'ingrédients prévus pour le produit alimentaire, ainsi que d'un liquide, en particulier de l'eau, avec les étapes suivantes:
- introduction des ingrédients dans une chambre de mélange (12) et
- pétrissage des ingrédients en une pâte,
**caractérisé en ce que**,
- le liquide, par une introduction du liquide au moyen d'une buse à fente individuelle orientée vers une paroi intérieure de boîtier de la chambre de mélange, est introduit sous haute pression dans les ingrédients se trouvant dans la chambre de mélange.

17. Procédé selon la revendication 16, **caractérisé en ce qu'**aux ingrédients et/ou à la pâte sont ajoutés des moyens d'oxydation pour influer sur un développement oxydant de la pâte, et qui sont sélectionnés dans le groupe composé de l'acide ascorbique, de l'ozone, du peroxyde d'hydrogène.
